# EUROPEAN PATENT APPLICATION

(11) **EP 1 182 369 A2**
(43) Date of publication of application: **27.02.2002**
(21) Application number: 01119948.6
(22) Date of filing: 17.08.2001
(51) Int. Cl.: F16B 37/08, F16B 37/02

(54) **Push nut**

(30) Priority: 25.08.2000 JP 2000256038; 30.11.2000 JP 2000365440; 24.07.2001 JP 2001223083
(71) Applicant: Piolax Inc., Yokohama-shi, Kanagawa-ken (JP)
(72) Inventor: Arakawa, Kouji, Yokohama-shi, Kanagawa-ken (JP)
(74) Representative: Grünecker, Kinkeldey, Stockmair & Schwanhäusser Anwaltssozietät

(57) **Abstract**

A push nut having a base member 1 perforated with a bolt through hole 2 at its center and a plurality of pieces of bolt locking pieces 4 extended from a peripheral edge portion 3 of the base member radially toward the bolt through hole 2 and to an upper side of the base member and when force in a drawing direction is operated to the bolt locking pieces, a surrounding 5 of the bolt through hole is brought into contact with the locking pieces to thereby restrict bending thereof in a lower direction.

## Description

### BACKGROUND OF THE INVENTION

### 1. Field of the Invention

The present invention relates to a nut of a press fit type for fixing an attached member to a bolt by way of a through hole perforated.

### 2. Description of the Related Art

There is known a bolt fastener as disclosed in Japanese Utility Model Laid-Open No. 41042/1995. The bolt fastener is fabricated by a spring steel sheet, and comprises: a cap having a shape in a hollow hexagon formed with a bolt guide hole at a ceiling portion thereof; a bolt locking portion extended with a plurality of spring claw portions front end portions of which are to be engaged with thread ridges of a bolt in skewed upper directions radially from a skirt end of the cap toward the center; and a fastening seat portion having leg pieces expanded similarly from a skirt end thereof outwardly in skewed lower directions and being integral with the spring claw portions.

Although when the bolt fastener having such a constitution is mounted to a bolt, no particular problem occurs, after the bolt fastener has been mounted, that is, when the bolt fastener is being used, in case in which some impact is applied to the fastener and excessive force is applied in a drawing direction of the bolt fastener opposed to a mounting direction thereof, since a length of a bending allowance of the spring claw portion stays the same as that in mounting the bolt fastener, and force of the spring claw portion for locking the thread groove is limited, and the spring claw portion per se is elastically deformed and becomes to be disengaged from the thread groove of the bolt even by small force, and when larger force is applied thereto, the bolt fastener is deformed to buckle in a reverse direction and cannot achieve a locking function as the nut. Further, at the same time, there is another problem that a performance of the bolt fastener for fastening the bolt is deteriorated by providing a large bending allowance to facilitate mounting thereof.

### SUMMARY OF THE INVENTION

When the rigidity of the spring claw portion is increased in consideration of an increase in strength and fastening force with regard to the drawing direction, excessive force is required in mounting thereof and an inherent significance of the push nut of being fastenable by small pushing force is lost. Hence, it is an object of the invention to provide a push nut fabricated easily and mountable by small pushing force, and on the other hand, achieves large resistance force in the drawing direction once the push nut is mounted to a bolt, as a result, the push nut is difficult to draw and achieves large fastening force.

It is another object of the invention to provide a push nut in which when a number of pieces of the push nuts are randomly packaged by bagging or the like, portions of the push nuts are not intertwined so as to dispense with separating operation prior to the attaching operation and accordingly, significant shortening of operation time period and promotion of operational efficiency are achieved.

In order to achieve the above-described object, according to a first aspect of the invention, there is provided a push nut made of a metal thin plate comprising:
a base member perforated with a bolt through hole at a center thereof so that a bolt passes through the bolt through hole; and
a plurality of bolt locking pieces extended from a peripheral edge portion of the base member radially toward the bolt through hole and to an upper side of the base member,
wherein when a force in a drawing direction is applied to the bolt locking pieces, a surrounding of the bolt through hole is brought into contact with the bolt locking pieces to restrict the bolt locking pieces from bending in a lower direction.

In this way, according to the first aspect of the invention, in a state in which the bolt is mounted with the push nut, when there is operated a force for lifting a rear face of the base member from a surface of an attached member in the vertical direction, that is, when the force in the drawing direction is operated to the push nut, front end portions of the respective bolt locking pieces are brought into contact with the surrounding of the bolt through hole and accordingly, a bending amount of the locking piece is mainly restricted to a comparatively short distance in the radius direction between a frontmost end portion of the locking piece engaged with a thread groove of the bolt and the contact portion, elastic deformation of such portion is considerably restricted and accordingly, large resistance force is exerted against the force operated in the drawing direction and at the same time, large fastening force is exerted. On the other hand, with respect to mounting of the push nut to the bolt, the bolt locking piece constitutes the bending amount over its entire length and at the same time, the above-described restriction is not related thereto at all and therefore, the push nut can easily be mounted to the bolt by press force equivalent to or smaller than that of the conventional push nut.

According to a second aspect of the invention, there is provided the push nut according to the first aspect of the invention, wherein the base member is a pair of base members folded a stamped piece of a metal thin plate to overlap via a folded-back portion;
the plurality of the bolt locking pieces are provided with one base member;
the bolt through hole is two bolt through holes provided at the base members, respectively;
each of the bolt locking pieces has length so that each of front end portions of the bolt locking pieces reaches the bolt; and
the bolt through hole of the one base member is larger in diameter than the bolt through hole of the other base member.

According to the second aspect of the invention, in a state of mounting the push nut to the bolt, when force for lifting a surface of an attached member in the vertical direction is operated to a rear face of the other base portion, that is, when force in a direction of drawing the push nut is operated thereto, the front end portions of the respective bolt locking pieces are brought into contact with a surrounding of the bolt through hole of the other base portion and a bending amount is restricted to a comparatively short distance in a radius direction between the front end portion of the bolt locking piece engaged with a thread groove of the bolt and the surrounding of the through hole. As a result, elastic deformation of the bolt locking piece is significantly restricted, large resistance force is exerted to stress in the drawing direction and at the same time, large force for fastening the bolt is exerted. On the other hand, in mounting the push nut to the bolt, the bolt locking piece constitute the bending amount over its entire length and therefore, the push nut can be mounted to the bolt easily by press force equivalent to or smaller than that of the conventional push nut. Further, the push nut is fabricated by blanking one sheet of the comparatively thin metal plate and therefore, the thin plate can be blanked and folded easily. Further, the push nut is mounted to the bolt by a single step and therefore, automatic mounting of the push nut by using an assembling machine can be carried out simply and firmly.

According to a third aspect of the invention, there is provided the push nut according to any one of the first and second aspects of the invention, further comprising a leg piece directly connected to the base member and positioned between an attached member and the base member,
wherein slits are perforated between the outer edge of the base member and the bolt through hole; and
the outer edge of the base member partitioned by the slits is bent to a lower side to form the leg piece having elasticity.

In this way, according to the third aspect of the invention, the elastic leg piece is formed in a shape of an endless arc and therefore, the elastic leg pieces are not intertwined and operation of attaching the push nut according to the invention to a bolt can be started at once after taking out a number of the push nuts from a package to thereby achieve significant shortening of operation time period and promotion of operational efficiency.

### BRIEF DESCRIPTION OF THE DRAWINGS

Fig. 1 is a perspective view of a first embodiment of a push nut according to the invention.
Fig. 2 is a plane view of the push nut shown in Fig. 1.
Fig. 3 is a side view of the push nut shown in Fig. 1.
Fig. 4 is a partially sectional perspective view in a state of use of the push nut shown in Fig. 1.
Fig. 5 is a partially sectional perspective view showing a state of operating force in a drawing direction to the push nut in the state of use shown in Fig. 4.
Fig. 6 is a plane view of a second embodiment of a push nut according to the invention.
Fig. 7 is a side view of the push nut shown in Fig. 6.
Fig. 8 is a partially sectional perspective view showing a state of use of the push nut according to the second embodiment shown in Figs. 6 and 7.
Fig. 9 is a perspective view of a third embodiment of a push nut according to the invention.
Fig. 10 is a plane view of the push nut shown in Fig. 9.
Fig. 11 is a side view of the push nut shown in Fig. 9.
Fig. 12 is a partially sectional perspective view in a state of use of the push nut shown in Fig. 9.
Fig. 13 is a partially sectional perspective view showing a state of operating force in a drawing direction to the push nut in the state of use shown in Fig. 12.
Fig. 14 is a plane view of a fourth embodiment of a push nut according to the invention.
Fig. 15 is a side view of the push nut shown in Fig. 14.
Fig. 16 is a plane view of a fifth embodiment of a push nut according to the invention.
Fig. 17 is a side view of the push nut shown in Fig. 16.
Fig. 18 is a side view of a sixth embodiment of a push nut according to the invention.
Fig. 19 is a partially sectional perspective view of a state of use of the push nut shown in Fig. 18.
Fig. 20 is a development view of a seventh embodiment of a push nut according to the invention.
Fig. 21 is a side view of the push nut shown in Fig. 20.
Fig. 22 is a side view showing a relative positional relationship immediately before insertingly fitting the push nut shown in Fig. 21 to a bolt.
Fig. 23 is a side view similar to Fig. 22 showing a state immediately after insertingly fitting the push nut shown in Fig. 21 to the bolt.
Fig. 24 is a side view similar to Fig. 23 showing a state of use in which the push nut shown in Fig. 21 has finished mounting to the bolt.
Fig. 25 is a side view similar to Fig. 24 showing a state of operating a force in a drawing direction to the push nut shown in Fig. 24.
Fig. 26 is a side view showing a eighth embodiment of a push nut according to the invention.
Fig. 27 is a side view showing a state of use of the push nut shown in Fig. 26.
Fig. 28 is a perspective view of a push nut according to a ninth embodiment.
Fig. 29 is a plane view of the push nut shown in Fig. 28.
Fig. 30 is a sectional view taken along a line X-X of Fig. 29.
Fig. 31 is a side view of the push nut shown in Fig. 28.
Fig. 32 is an explanatory view showing a state of use of the push nut shown in Fig. 28.

### DETAILED DESCRIPTION OF THE PREFERRED EMBODIMENTS

### (Embodiment 1)

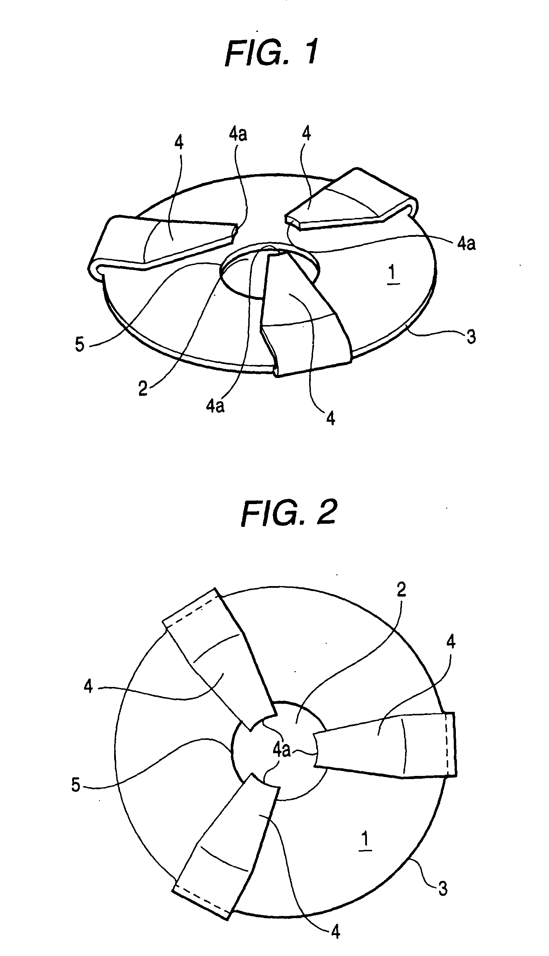

In Fig. 1 through Fig. 3, a push nut according to the invention is provided with a base member 1 having a shape of a circular disk punched out from one sheet of a metal plate of steel and its central portion is perforated with a bolt through hole 2 for inserting a bolt to be attached with an allowance in the diameter direction. Further, three sheets of bolt locking pieces 4 are extended in the form of being folded back from a peripheral edge portion 3 of the base member 1 radially to an inner side while being inclined upwardly on the upper side of the base member 1 at equal angular intervals. Once the push nut having such a constitution is mounted to a bolt, even when stress in a vertical direction, that is, a drawing direction exerted from an attached member pressed and supported by a lower portion of the push nut, is operated to the push nut, front end portions 4a of the bolt locking pieces 4 are brought into contact with a surrounding 5 of the bolt through hole 2 to thereby restrict a bending amount between the surrounding 5 and free ends of the front end portions 4a engaged with a thread groove of the bolt to a comparatively short distance in the radius direction and therefore, large resistance force is achieved. On the other hand, the push nut is mounted to the bolt in the form of passing a front end portion of the bolt through the through hole 2 and thereafter pushing the push nut to a lower side, at that occasion, the bolt locking piece 4 constitutes a bending amount L1 over its entire length and is not brought into contact with the surrounding of the through hole and accordingly, the push nut is easily mounted by press force similar to or smaller than that of the conventional push nut.

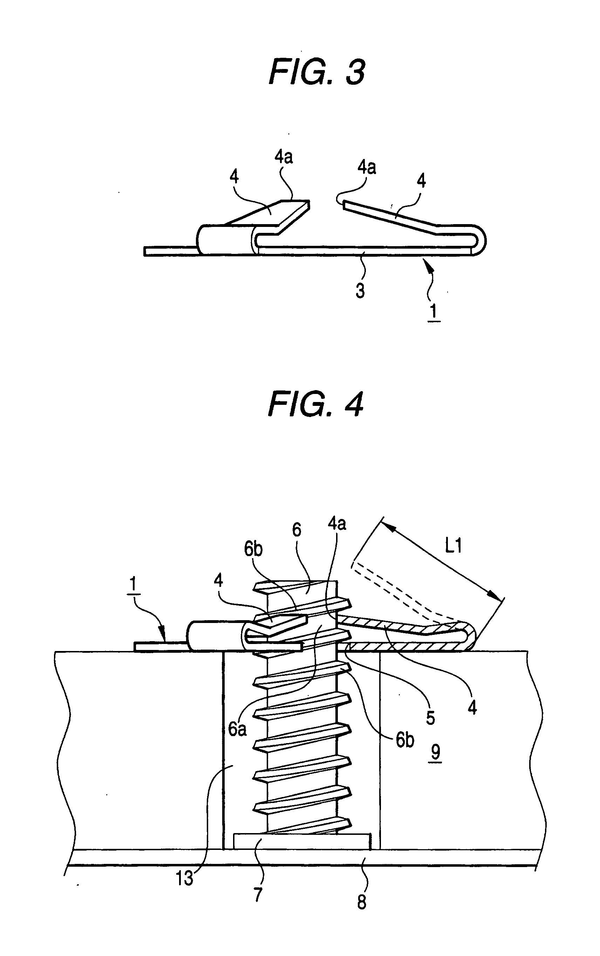

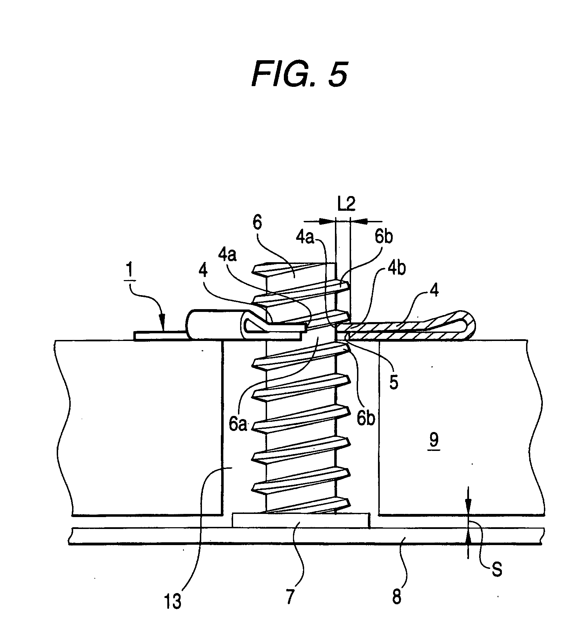

When a specific explanation is given to the restricting operation of the bolt locking piece 4 in the drawing direction in reference to Fig. 4 and Fig. 5, a head portion 7 of a bolt 6 is fixedly attached to a base plate 8 mounted with an attached member 9 in a plate-like shape perforated with a through hole 13 and a normal thread groove 6a and a normal thread ridge 6b are threaded at a shaft portion of the bolt 6. The front end portions 4a of three sheets of the bolt locking pieces 4 are extended to positions biting into the through hole 2 as is seen in Fig. 2 constituting the plane view even when the front end portions 4a are not used. In Fig. 4 showing a normal state of use of the push nut, the front end portion 4a of the bolt locking piece 4 is engaged with the thread groove 6a of the bolt 6, meanwhile, a rear face of the base portion 1 of the push nut is brought into contact in flush with the surface of the attached member 9 mounted on the base plate 8, by forcibly pushing the push nut to the bolt 6 as deep as possible, elastic compression force for deviating the base portion 1 downwardly is produced between the base portion 1 and the thread ridge 6b of the bolt 6 via the bolt locking piece 4 although there is more or less spring back and the attached member 9 is pressed from above and supported by and fixed to the base plate 8.

In Fig. 5, there is shown a state in which the attached member 9 is operated with some force upwardly in the vertical direction and is floated up from the base plate 8 by an interval S, under such a state, that is, under a state of operating force in the drawing direction to the push nut, the base portion 1 is lifted in a direction of being proximate to the respective bolt locking pieces 4, as a result, the front end portions 4a of the bolt locking pieces 4 are brought into contact with the surrounding portion 5 of the bolt through hole 2 and therefore, when the force in the drawing direction is large, a bending amount L2 formed between the contact portion and a free end of the front end portion 4a locked in the thread groove 6a of the bolt 6, is restricted to a comparatively short distance in the radius direction. However, bending rigidity of the distance in the radius direction is extremely large and therefore, elastic deformation is significantly restricted and accordingly, large resistance force is exerted against the force in the drawing direction and at the same time, large fastening force is exerted to the bolt 6.

### (Embodiment 2)

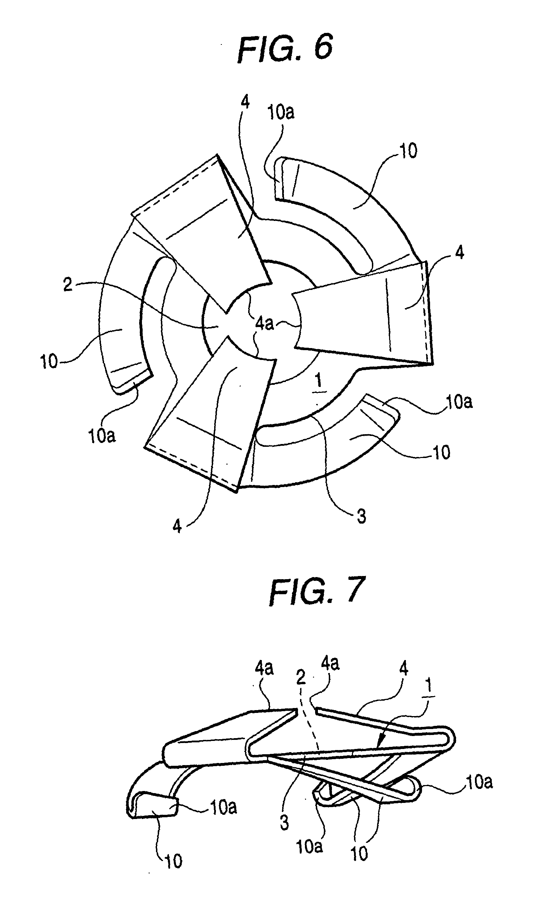

Next, an explanation will be given of a second embodiment of a push nut according to the invention. In Fig. 6 and Fig. 7, there is shown a push nut having elastic pieces 10 extended downwardly from a plane of the base member 1. The elastic pieces are formed as three sheets of tongue pieces in a shape of a bow having the same shape at the peripheral edge portion 3 of the base member 1 notched from root portions of the respective bolt locking pieces 4 along the peripheral direction and are inclined in skewed lower directions along the peripheral direction among contiguous ones of the bolt locking pieces 4. Further, front end portions 10a of the respective elastic pieces 10 are bent in an upward direction to thereby ensure to carry out smoothly slidal movement of the front end portions 10a relative to the surface of the attached member produced in attaching the push nut without damaging the surface.

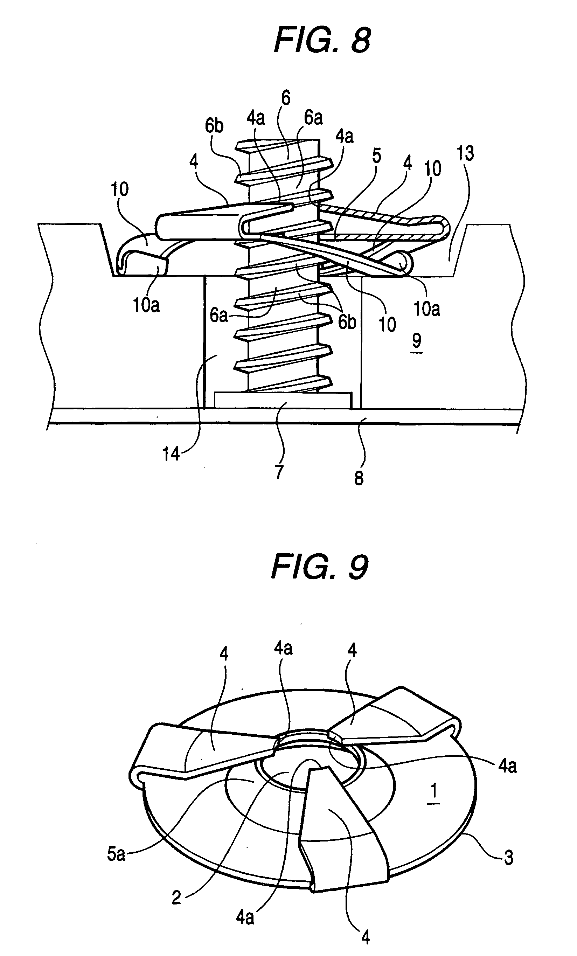

Particularly, in Fig. 8, when the push nut having such a constitution is mounted to a ring-like recess portion 13 perforated at the surrounding of a through hole 14 at the surface of the attached member 9 via the bolt 6, three sheets of the elastic pieces 10 are exerted with compression force from above, inclination degrees of the respective elastic pieces 10 are weakened in the peripheral direction and at the same time, the respective front end portions 10a slide on the surface of the ring-like recess portion 13 in the peripheral direction. Meanwhile, the front end portions 4a of the bolt locking pieces 4 are locked by the thread ridge 6b of the bolt 6 and therefore, a total of the push nut is brought into a state of being compressed in the lower direction. Thereby, the push nut pushes the attached member 9 in the lower direction via the elastic pieces 4. At this occasion, an entire length of the respective elastic piece 10 substantially corresponds to a length of a circular arc in an interval of separating three sheets of the bolt locking pieces 4 in the peripheral direction and the length is formed along the peripheral edge portion 3 of the base member 1 and accordingly, an extra space is not taken and the length is a long effective length regardless thereof. Therefore, even when a sheet having high rigidity is used to provide solidity to the push nut, necessary compression elasticity can be ensured since the elastic piece 10 is provided with the effective length sufficiently for enabling elastic deformation.

By ensuring the sufficient compression elasticity, not only the mountability to the bolt is promoted but also play between the bolt 6 and the bolt locking pieces 4 in the axial direction is restrained, the elastic pieces 10 support the attached member 9 in a stable state while deviating to the lower side and therefore, large fastening force is exerted to both members. Further, the push nut of the mode is considerably projected from the surface of the attached member 9 in attaching the push nut and therefore, the projected portion is reduced by mounting the push nut in the ring-like recess portion 13 perforated at the surrounding of the through hole 14.

### (Embodiment 3)

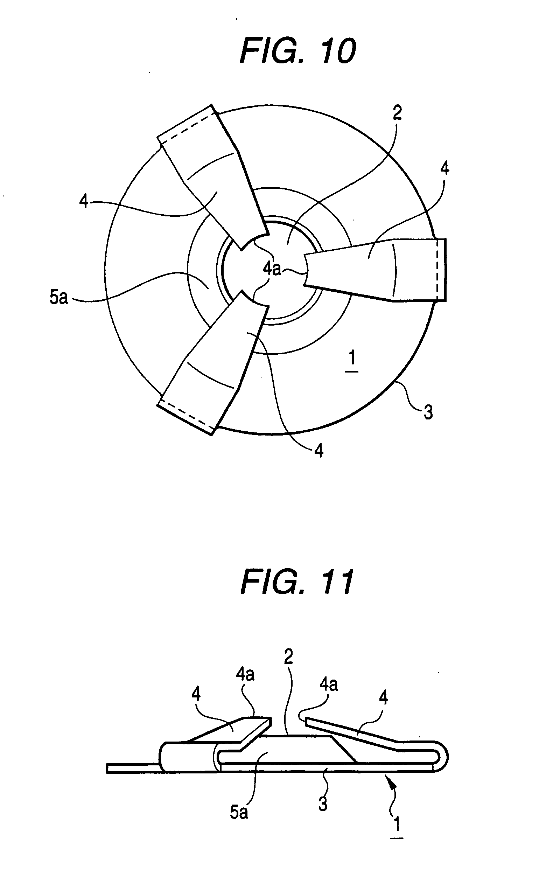

In Fig. 9 through Fig. 11, there is shown a third embodiment of a push nut according to the invention. The push nut is provided with substantially the same shape and constitution as those of the first embodiment shown in Fig. 1 through Fig. 3 and although an explanation of details thereof is omitted here, only one different point resides in that at a position on the lower side of the bolt locking pieces 4, there is formed a raised portion 5a projected upwardly at a surrounding portion of the bolt through hole 2. Therefore, when force in the drawing direction is operated to three sheets of the bolt locking pieces 4, the front end portions 4a of these are brought into contact with the bolt and the raised portion 5a to thereby form a bending amount having an extremely short length and further downward movement of the bolt locking pieces 4 is substantially restricted.

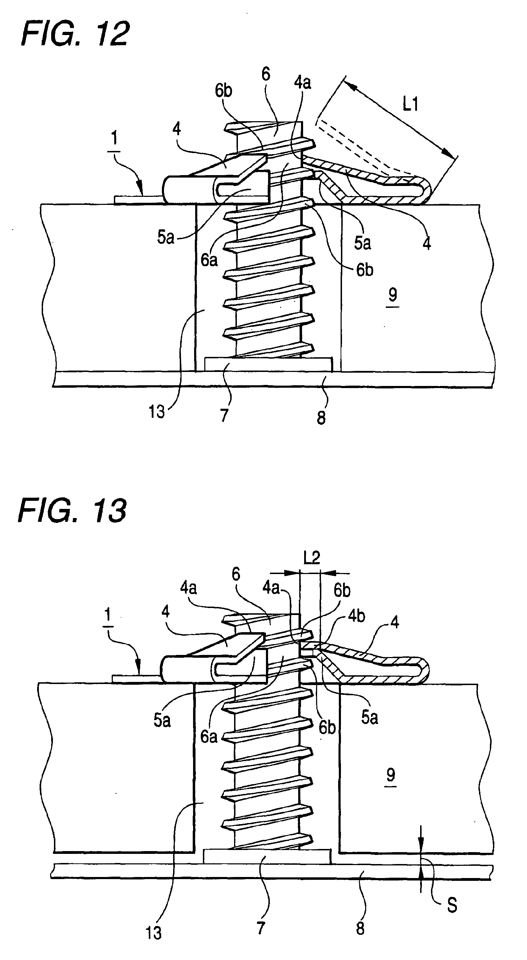

When a further detailed explanation is given to restricting operation of the bolt locking pieces in the drawing direction in reference to Fig. 12 and Fig. 13, according to the push nut of the embodiment, similar to the above-described case, the push nut is fixed to the thread groove 6a of the bolt 6 by pressing the front end portion of the bolt 6 to the attached member 9 via the through hole 2. Therefore, the base portion 1 is supported by elastically pressing the attached member 9 to the base plate 8.

The surrounding 5 of the bolt through hole 2 is formed with the projected raised portion 5a as described above and accordingly, as seen in, for example, Fig. 13, when the attached member 9 is lifted upwardly from the base plate 8 by the small interval S, even when force is operated in a direction of lifting the push nut, that is, in the drawing direction, the bending amount L1 of the bolt locking piece 4 in mounting the push nut, is substantially restricted to the bending amount L2 which is an extremely short distance in the radius direction between the free end of the front end portion 4a engaged with the thread groove 6a and a portion 4b of the front end portion 4a which is brought into contact with a peripheral edge end portion of the raised portion 5a and therefore, large bending rigidity is achieved and accordingly, large resistance force and fastening force are achieved without a concern of buckling deformation. On the other hand, when the push nut is mounted to the bolt 6, the bolt locking piece 4 effectively achieves elastic operation by the bending amount L1 over its entire length and therefore, sufficient flexible performance is achieved over the entire length without being hindered by the raised portion 5a and the push nut is engaged with the thread groove 6a of the bolt 6 easily by press force equivalent to or smaller than that of the conventional push nut.

Further, it is preferable that the above-described raised portion 5a is provided with a conical shape as illustrated and when the push nut is mounted to the bolt 6 via the attached member 9, the front end portion of the bolt is guided into the through hole 2 while being brought into contact with an inner peripheral face of the projected conical shape portion and the bolt 6 is inserted into the through hole 2 easily and firmly. Thereby, the push nut is mounted to the bolt 6 simply and firmly.

### (Embodiment 4)

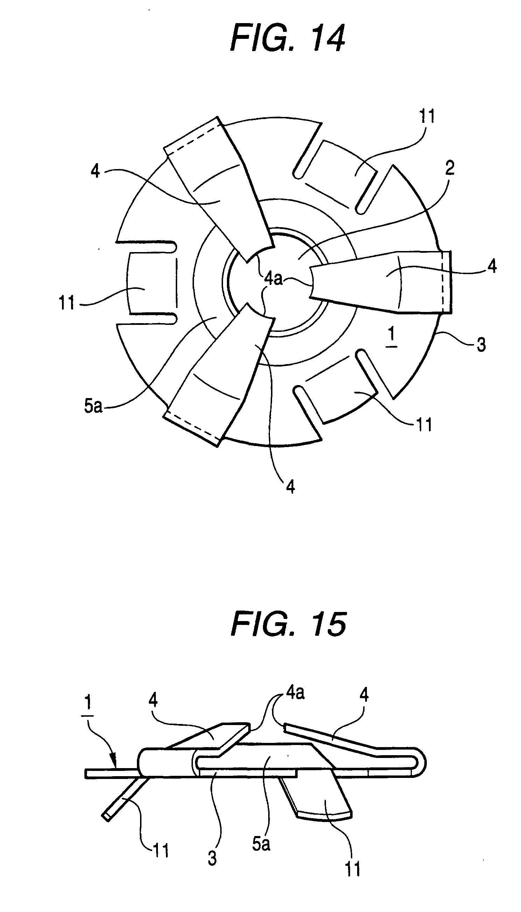

In Fig. 14 and Fig. 15, there is shown a fourth embodiment of a push nut according to the invention. There is shown the push nut having elastic pieces 11 extended downwardly from the plane of the base member 1. The elastic pieces 11 are formed as three sheets of tongue pieces having the same shape notched from the peripheral edge portion 3 of the base member 1 in the radius direction at middle positions in the peripheral direction of contiguous ones of two sheets of the bolt locking pieces 4 and folded to bend to expand in skewed lower directions.

When the push nut having such a constitution is actually attached to the surface of the attached member 9 via the bolt 6, outer end portions of three sheets of the elastic pieces 11 are moved outwardly in the radius direction, press the attached member 9 downwardly by elastic force of these and, at the same time, operate to elastically deviate the thread ridge 6b of the bolt 6 upwardly by the bolt locking pieces 4 and the push nut per se is locked to the bolt 6 in a state of being compressed in the axial direction.

Therefore, play between the thread groove 6a of the bolt 6 and the front end portion 4a of the bolt locking piece 4 in the axial direction is restrained, the push nut presses the attached member 9 in an elastically stable state via the base member 1 and accordingly, the large fastening force is exerted among the members.

### (Embodiment 5)

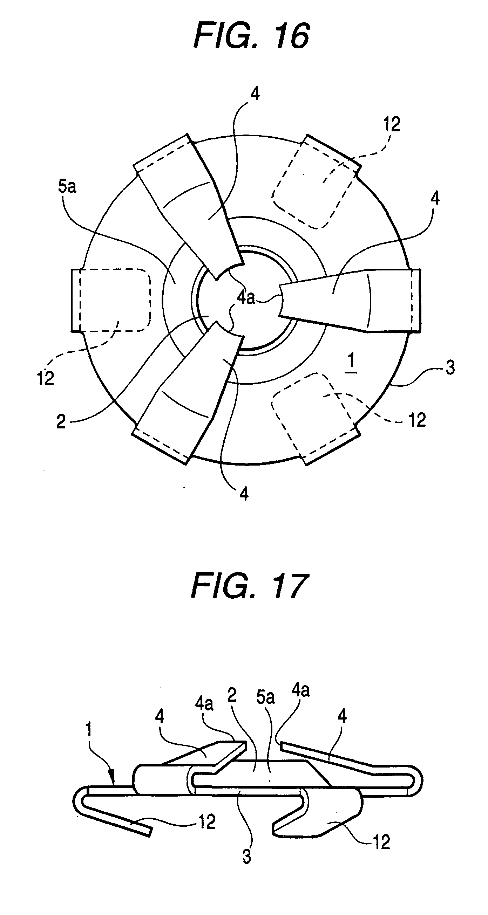

In Fig. 16 and Fig. 17, there is shown a fifth embodiment of a push nut according to the invention. Only an elastic piece 12 having an object the same as that of the above-described elastic piece 11 and having a constitution different from that of the elastic piece 11, differs from the fourth embodiment shown by Fig. 14 and Fig. 15, when the base member 1 is punched out from a steel plate, the elastic pieces 12 are previously provided as tongue pieces projected from the peripheral edge portion 3 outwardly in the radius direction among the respective bolt locking pieces 4 at equal angular intervals in the peripheral direction and thereafter folded back from the peripheral edge portion 3 with more or less angle relative to the rear face of the base member 1. A distance in the axial direction of separating the rear face of the base member 1 and a front end portion of the elastic piece 12, prescribes an elastically deformable range of the elastic piece 12.

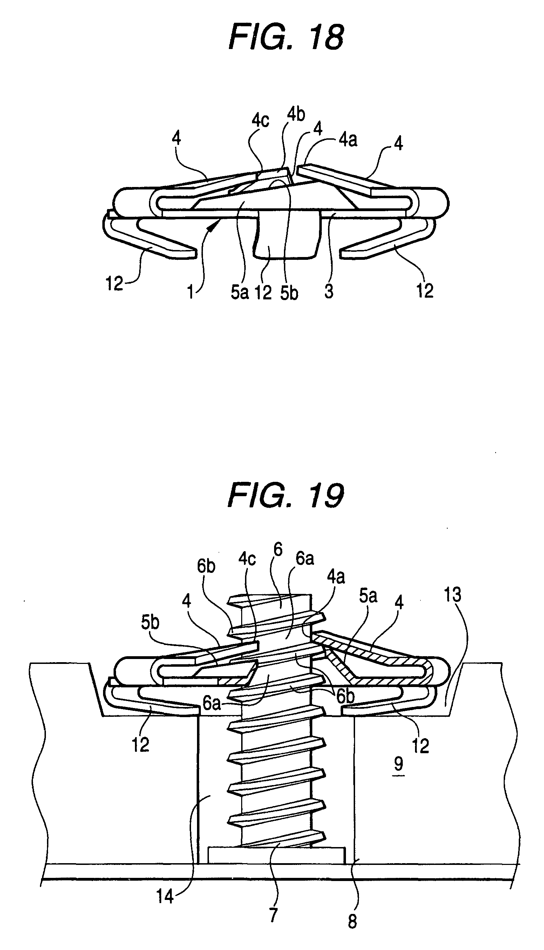

A mode of the push nut having the elastic pieces 12 for supporting the attached member 9 via the bolt 6 is substantially the same as that of the above-described fourth embodiment. However, by providing the elastic pieces 12 by folding back the elastic pieces 12 to the rear side of the base member 1, a length of the push nut in the axial direction is increased and occasionally, there is a case in which the large projected portion constitutes a hindrance of operation. Hence, as one resolution measure, as exemplified in Fig. 8 and Fig. 19, it is suggested to perforate the ring-like groove 13 having a size in correspondence with a contour of the base member 1 at the surrounding of the through hole 14 having a slightly large diameter for inserting the bolt 6 with allowance.

Thereby, the base member 1 can be fitted into the ring-like recess portion 13 at least partially and the projected height is reduced. Front end portions of the elastic pieces 12 move inwardly in the radius direction on a bottom face of the ring-like groove 13 by press force exerted in the axial direction in mounting the push nut and therefore, the elastic pieces 12 per se do not extrude from the peripheral edge portion 3 of the base member 1. This signifies also an advantage that a wide space is not needed at the surrounding of the push nut.

Further, when an explanation is given of a sixth embodiment of a push nut according to the invention in reference to Fig. 18 and Fig. 19, an upper end face 5b of the raised portion 5a formed by projecting the surrounding of the through hole 2, is inclined in conformity with a thread ridge pitch of the bolt 6. In mounting the push nut, all of front end portions 4a, 4b and 4c of the three bolt locking pieces 4 are not always engaged with inside of the thread groove 6a of the bolt 6 firmly and some of these may be brought into a state of being simply brought into contact with the thread ridge 6b. Therefore, by inclining the upper end face 5b of the raised portion 5a in conformity with the thread ridge pitch of the bolt 6, in mounting the push nut, the push nut is once pushed down strongly and in elastic repulsion thereof, all of the front end portions 4a, 4b and 4c are forcibly engaged with the inside of the thread groove 6a in the same pitch. Even when force in the drawing direction is operated to the push nut, three of the bolt locking pieces 4 resist unanimously the force in the drawing direction strongly and the push nut is held to the bolt 6 by firmer and larger fastening force.

### (Embodiment 6)

Similarly, according to the sixth embodiment, the respective front end portions 4a, 4b and 4c of the three bolt locking pieces 4 directed inwardly in a radius direction, are provided with stepped differences in conformity of the thread ridge pitch of the bolt. Normally, the respective front end portions 4a, 4b and 4c of the bolt locking pieces 4 are arranged to extend to surround the bolt radially on the same plane and in the state in which the push nut is mounted to the bolt 6, all of the front end portions 4a, 4b and 4c are not necessarily engaged firmly with the thread groove 6a of the bolt 6.

Therefore, as shown by Fig. 18, with regard to height positions of the front end portions 4a, 4b and 4c of the respective bolt locking pieces 4, by providing stepped differences thereamong in conformity of the single ridge pitch of the bolt 6, at time point of mounting the push nut, that is, at time point of pushing the push nut to the bolt, as is seen in Fig. 19, all of the respective front end portions 4a, 4b and 4c are firmly engaged with inside of the thread groove 6a. Therefore, even when force in the drawing direction is operated to the push nut, uniform resistance force is produced at all the bolt locking pieces 4 by the bending amount between the bolt locking piece 4 and the peripheral edge portion of the raised portion 5a and accordingly, the push nut is held by the bolt 6 by firmer and larger fastening force.

As shown by Fig. 18 and Fig. 19, the sixth embodiment of the push nut according to the invention is provided with the two large constituent conditions of inclining the upper end face 5b of the raised portion 5a in conformity with the thread ridge pitch and providing the stepped differences to the front end portion 4a, 4b and 4c of the bolt locking pieces 4 similarly in conformity with the thread ridge pitch and it is self-evident that by combining the constituent conditions as in the illustrated example, there is achieved a large synergic effect of facilitating to mount the push nut 6 and holding the push nut by firmer and larger fastening force.

### (Embodiment 7)

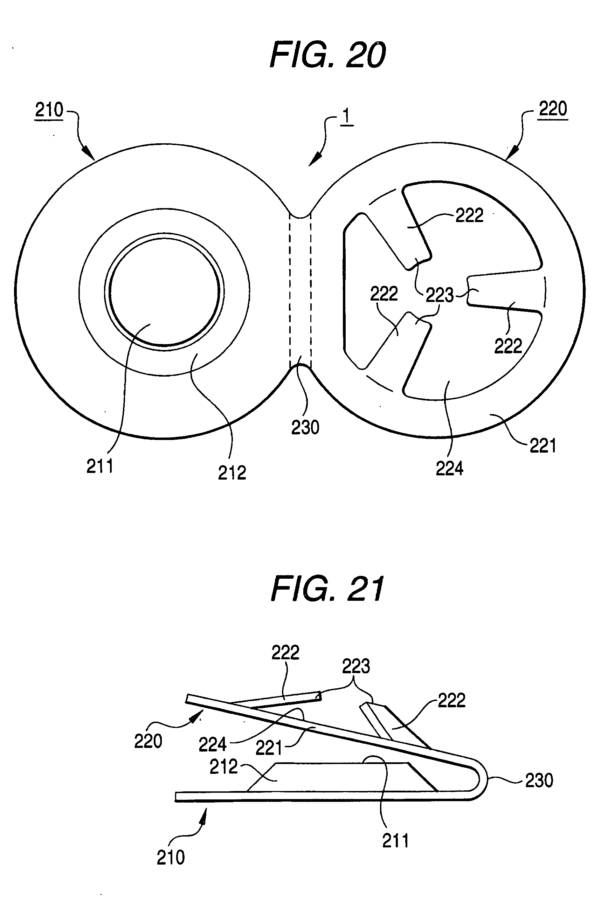

In Fig. 20, a seventh embodiment of a push nut according to the invention is constituted by a blanked piece 1 of one sheet of thin plate made of metal provided with one base portion 220 and other base portion 210 respectively on the left and on the right. According to the embodiment, both of outer edge portions of the one base portion and other base portion are formed by shapes of circles having the same diameter, the one base portion 220 and the other base portion 210 are arranged in axis symmetry via a folded-back portion 230 and accordingly, portions of the outer edges are connected to overlap each other. Further, in later steps, the other base portion 210 and the one base portion 220 are folded with an angle to some degree therebetween or to form faces parallel to each other to thereby constitute a twice-folded portion and therefore, the overlapped folded-back portion 230 forms a partially circular section.

In this way, the push nut according to this embodiment is fabricated by blanking one sheet of comparatively thin metal plate and therefore, blanking and folding thereof is facilitated. Further, it is not necessary to use a special jig for aligning the bolt through hole 211 and front ends 223 of bolt locking pieces 222 for engaging with a thread groove of a bolt.

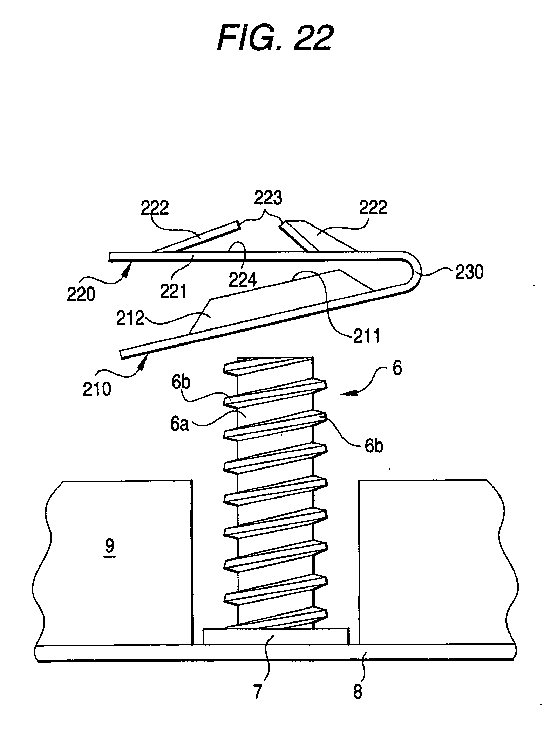

Further, in order to attach an attached member 9 constituting an element to be fixed by a bolt 6 extended from a fixed member 8 (refer to Figs. 22 through 25 and Fig. 27), a bolt through hole 211 for passing the bolt 6 extended to penetrate the attached member 9 is perforated at center of the other base portion 210. As one embodiment, a surrounding of the bolt through hole 211 is formed to punch out into a raised portion 212 in a conical shape projected upwardly. The one base end portion 220 is provided with an outer edge portion 221 in a ring-like shape and three pieces of the bolt locking pieces 222 extended radially from the outer edge portion toward an inner side and arranged at equal angular intervals. Further, the front end portion 223 of the bolt locking piece 222 is set with a length to reach and to be engaged with a thread groove 6a of the bolt 6 on an inner side of the bolt through hole 221 perforated at the other base portion (refer to Figs. 22 through 25 and Fig. 27) when the other base portion 210 and the one base portion 220 are folded to overlap.

As is apparent from Fig. 21, the bolt locking pieces 222 are folded in skewed upper directions with a constant angle relative to the outer edge portion 221 such that the front end portions 223 are positioned on an upper side of the bolt through hole 211. Further, even in such a state, the front end portions 223 of the bolt locking pieces 222 must be disposed on the inner side of the bolt through hole 211 since in executing the embodiment, the front end portions 223 must be engaged with the thread groove of the bolt penetrating the bolt through hole 211 of the other base portion 210.

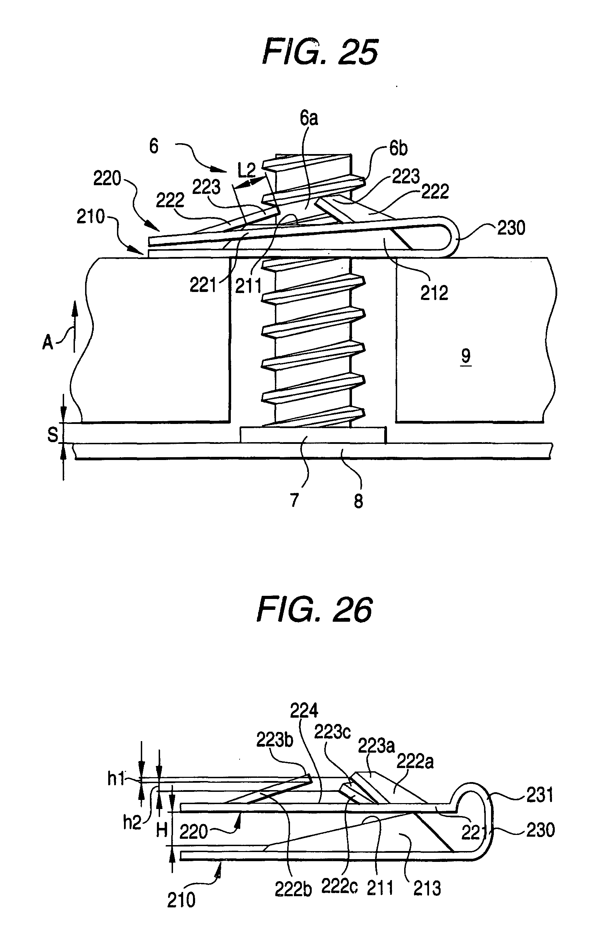

Further, a diameter of the bolt through hole 211 of the other base portion 220 is made smaller than a diameter of a bolt through hole 224 of the one base portion 220, with regard to the bolt locking pieces 222, as shown by Fig. 25, when external force by vibration or the like is operated to the attached member 9 and force A in the drawing direction of floating up the attached member 9 in an upper direction by a distance S, is operated to the other base portion 210, the front end portions 223 of the bolt locking pieces 222 of the one base portion 220 are brought into contact with a surrounding of the bolt through hole 211 and bending movement of the bolt locking pieces in the lower direction is restricted.

Next, an explanation will be given of a state of mounting the push nut to the bolt successively as follows in reference to Figs. 22 through 24 showing a procedure of mounting the push nut according to this embodiment to the bolt.

Fig. 22 shows a state of tacking the attached member 9 penetrated with the bolt onto the base plate 8 fixed with a head portion 7 of the bolt 6 and the push nut shown in Fig. 21 according to the invention is brought to right above the bolt 6 prior to being insertingly fitted from a free end portion of the bolt 6. At this occasion, the respective front end portions 223 of the bolt locking pieces 222 extended to an inner side in the radius direction toward skewed upper directions, are positioned such that a plane of the one base portion 220 of the push nut orthogonally intersects with an axial line in the longitudinal direction of the bolt to alleviate contact resistance in bringing the respective front end portions 223 into contact with a thread ridge 6b of the bolt 6. Further, since the diameter of the bolt through hole 211 perforated at an upper end face of the raised portion 212 in the conical shape of the other base portion 210, is set to be large to a degree of capable of skewedly passing the bolt 9, when the push nut is insertingly fitted, contact resistance is not particularly effected on the push nut.

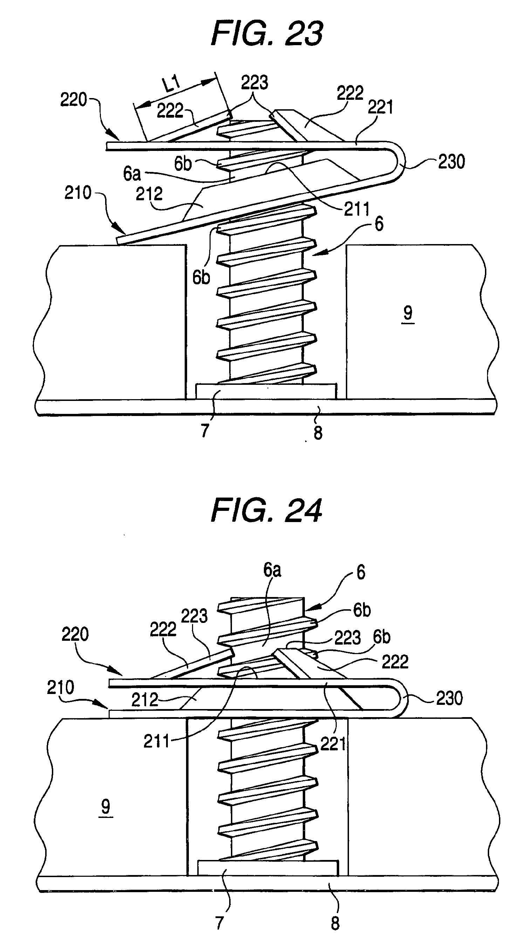

Fig. 23 shows a state in which the push nut is insertingly fitted to the bolt 6 although the state is incomplete, there is brought about a state in which an outer edge of the other base portion 210 is brought into contact with a surface of the attached member 9 and the front end portions 223 of the bolt mounting pieces 222 of the one base portion 220 are caught by the thread ridge 6b of the bolt 6, meanwhile, there is brought about a state in which the attached member 9 is loosely fitted to the bolt 6. Therefore, there is brought about a state in which the push nut is firstly positioned to the bolt 6 to be mounted with the push nut.

Fig. 24 shows a state in which the attached member 9 is elastically fixed to the bolt 6 by the push nut according to this embodiment, in other words, shows the state of finally mounting the push nut. According to the push nut shown in Fig. 23, the outer edge portion 221 in the ring-like shape of the one base portion 220 is pushed from above, the front end portions 223 of the bolt locking pieces 222 slidingly pass several portions of the thread groove 6a and the thread ridge 6b and thereafter, the outer edge of the one base portion 220 is brought temporarily to a position of being brought into contact with the surface of the base portion 210. Thereafter, the one base portion 220 is lifted in the upper direction by the elastic repulsive operation of the folded-back portion 230, at the same time, the front end portions 223 of the bolt locking pieces 222 are engaged with predetermined portions of the thread groove 6a or brought into contact with side face portions of the thread ridge 6b or the thread groove 6a to thereby take stabilized fixed positions.

In Fig. 25, there is shown a state in which the force in the drawing direction designated by the arrow mark A is operated along the axial direction to the attached member 9 against elastic force of the folded-back portion 230 at the one base portion 220 via the other base portion 210 of the push nut. In such a state, a bending amount L1 of the bolt locking piece 222 shown in Fig. 23 is restricted to a comparatively short distance L2 in the radius direction between the free end of the front end portion 223 of the bolt locking piece 222 engaged with the thread groove 6a of the bolt 6, and an upper end edge of the raised portion 212 in the conical shape formed at the surrounding of the through hole 211 and elastic deformation, that is, bending of the bolt locking piece 222 is significantly restricted. This signifies that the rigidity of the bolt locking piece 222 per se is increased, play produced between the attached member 9 and the bolt 6 is significantly reduced, as a result, even when the push nut receives stress in the drawing direction from the bolt, the push nut is difficult to disengage therefrom and accordingly, large fastening force is exerted to the bolt.

Further, at the same time, by forming the raised portion 212 in the conical shape at the surrounding of the through hole 211, a distance of separating the bolt locking piece 222 and the upper end edge of the raised portion 212 in the axial direction is extremely narrowed and a speed of bringing the bolt locking piece 222 into contact with the surrounding of the through hole 211 when the drawing direction force A is exerted, is significantly accelerated. Further, as a modification of this embodiment, when the raised portion 212 is not provided, there is determined the distance L2 in the radius direction which is a comparatively long bending amount by bringing the surrounding of the bolt through hole 211 into contact with the locking piece 222.

Further, by forming the raised portion 212 in the conical shape at the surrounding of the through hole 211, when the attached member 9 is fixed to the bolt 6, the front end portion of the bolt is brought into contact with an inner peripheral face of the raised portion 212 in the conical shape and is guided thereby and accordingly, the bolt is easily inserted into the bolt through hole 211 and automatic mounting using an assembling machine is carried out extremely simply and firmly.

When the bolt 6 is mounted to the push nut, the bolt locking piece 222 constitutes a bending amount over its entire length and therefore, the push nut can easily be mounted to the bolt by press force equivalent to or smaller than that of the conventional push nut. Further, when the push nut is mounted to the bolt 6, by constituting the folded-back portion 230 by a semicircular shape or in a U-like shape, large elastic deformation performance is ensured by exerting small press force to the outer edge portion 221 in the ring-like shape of the one base portion 220 and the push nut is easily mounted to the attached member 9 via the bolt 6. Further, since the folding operation is extremely elementary and simple, fabrication of the push nut is extremely facilitated.

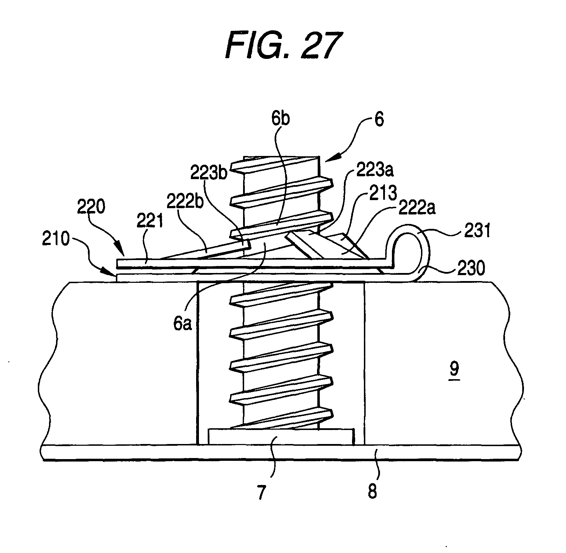

An explanation will be given as follows of a constitution and a mode of use of a eighth embodiment of a push nut according to the invention in reference to Fig. 26 and Fig. 27.

According to the seventh embodiment shown in Figs. 20 through 24, all of the respective bolt locking pieces 222 are not always engaged firmly with inside of the thread groove 6a of the bolt in mounting thereof but one of these may be brought into a state of being simply brought into contact with the thread ridge 6b. Hence, according to the second embodiment of the push nut of the invention shown in Fig. 26, respective front ends portions 223a, 223b and 223c of three sheets of bolt locking pieces 222a, 222b and 222c, are arranged with differences in step heights in conformity with a pitch of the thread groove 6a of the bolt 6 by respective stepped differences h1 and h2. Incidentally, according to the example, there is established a relationship of h1=h2.

By arranging the respective front end portions 223a, 223b and 223c of the bolt locking pieces 222a, 222b and 222c in this way, as shown by Fig. 27, the respective front end portions 223a, 223b and 223c are firmly engaged with inside of the thread groove 6a all of which constitute a single pitch in a spiral shape by a single pressing operation in mounting. Therefore, even when force in the drawing direction is operated to the push nut, uniform resistance force is produced in all of the bolt locking pieces and therefore, the push nut is held to the bolt by firm and large fastening force.

Further, although according to the embodiment shown by Figs. 26 and 27, there is provided the upper face 211 inclined in conformity with the pitch of the thread groove 6a or the thread ridge 6b of the bolt 6 engaged with the bolt locking pieces 222a, 222b and 222c, the embodiment may be used by being integrated with the raised portion 212 having the upper end face which is not inclined shown by Figs. 20 through 25.

Further, even when the raised portion 13 having the inclined upper end face 211 is applied to the push nut having the bolt locking pieces 222 according to the first embodiment having the front end portions which are not arranged with differences in step heights, by the press force exerted to the push nut, all of the front end portions 223 are brought into contact with the inclined upper end face 211 of the raised portion 13, as a result, the front end portions 223 are temporarily arranged in the peripheral direction with stepped differences individually and by elastic repulsive force of the push nut per se produced later, all of the front end portions of the bolt locking pieces are firmly held in the thread groove 6a having a single pitch.

Further, according to the eighth embodiment, there is shown a portion 31 of the folded-back portion 230 in which an outer edge on the side of the one base portion is raised upwardly. In this way, in a state in which an elastic deformation path of the folded-back portion 230 is extended upwardly and significantly in a shape of a circular arc and the push nut is mounted to the bolt 6, the one base portion 220 and the other base portion 210 are positioned as planes always in parallel with each other. As a result, by only exerting slight press force from a position right above the bolt 6 in the vertical direction, the front end portions 223a, 223b and 223c of the bolt locking pieces 222a, 222b and 222c of the push nut are firmly fitted into the inside of the thread groove 6a of the bolt 6. When the drawing direction force A is exerted to the other base portion 210, the one base portion 220 and the other base portion 210 are brought into face contact with each other to thereby integrate with each other from the state shown by Fig. 27 to thereby achieve holding force uniform in the peripheral direction to the bolt 6.

As is easily understood from Fig. 27, according to the above-described eighth embodiment, it will be understood that the extremely ideal push nut is provided by simultaneously including three constituting conditions according to the invention of forming the inclined upper end face 211 at the raised portion 13 in the conical shape of the other base portion 210, constituting an upper portion of the folded-back portion 230 by the portion 31 produced by raising upwardly the outer side edge of the one base portion 220 and aligning the front end portions 223a, 223b and 223c of the locking pieces with differences in step heights.

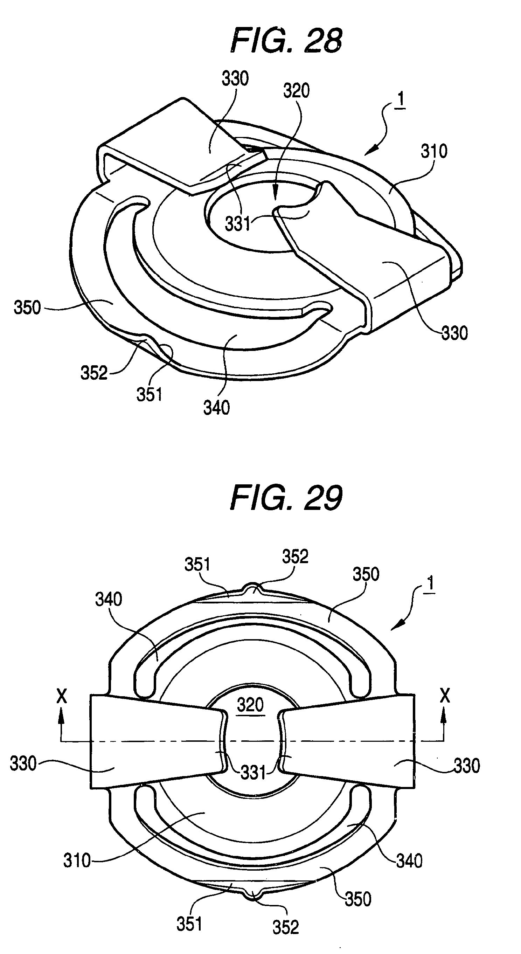

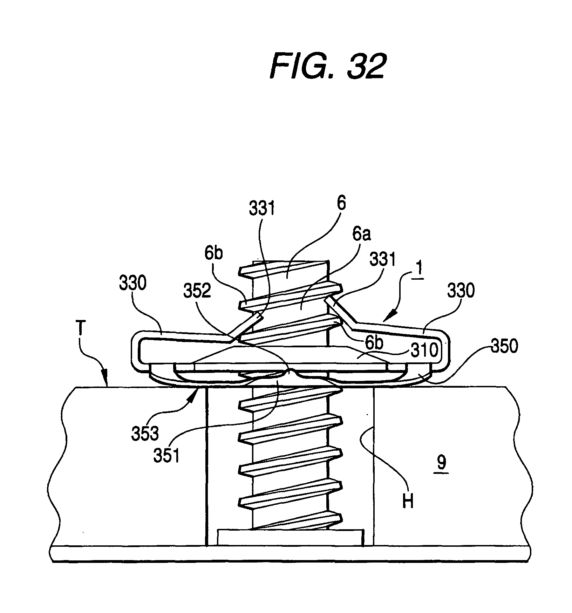

In Fig. 28 through Fig. 31, a push nut 1 according to a ninth embodiment of the invention is provided with a base portion 310 having a shape of a circular disk punched out from one sheet of a metal plate of steel and its central portion is perforated with a bolt through hole 320 for inserting a bolt 6 (refer to Fig. 32) to be attached with an allowance in the diameter direction. Further, two sheets of bolt locking pieces 330 are extended in the diameter direction while being inclined upwardly on an upper side of the bolt through hole 320 in the form of being folded back from peripheral edge portions of the base portion 310. Further, between an outer peripheral edge of the base portion 310 and the bolt through hole 320, there are perforated a pair of slits 340 in a shape of a circular arc on both sides of the extended portions of the bolt locking pieces 330 and outer peripheral portions in a shape of slender bow directly connected to the base portion 310 partitioned by the slits 340, are folded to bend to a lower side to thereby form elastic leg pieces 350.

The elastic leg piece 350 of the push nut 1 according to this embodiment is formed in a shape of an endless arc and therefore, the elastic leg pieces are not intertwined at inside of a packaging member such as a polyvinyl bag, operation time period for attaching the push nut according to this embodiment to a bolt is significantly shortened since after taking out a number of the push nuts from a package, there is brought about a state capable of starting the operation at once and accordingly, promotion of operational efficiency is achieved.

Further, a central portion 351 of the elastic leg piece 350 of the push nut 1 according to the invention, is folded back upwardly to thereby form a portion 353 in contact with a surface T of an attached member 9 as shown by Fig. 32.

Thereby, although when front end portions 331 of the bolt locking pieces 330 which are folded to bend further upwardly, and a thread groove 6a of the bolt 6 are engaged to thereby fix the attached plate 9, the push nut 1 is strongly pressed to the surface T of the attached member 9 having an attaching hole H for penetrating the bolt 6 and the push nut 1 is moved from an illustrated position to the lower side, when press force is released thereafter, the front end portions 331 of the bolt locking pieces 330 are brought into contact with upper portions of pairs of portions of a thread ridge 6b partitioning the thread groove 6a and the base portion 310 is lifted by spring force of the elastic leg pieces 350 and is locked to a predetermined position in the axial direction. During a time period of such a step of press-fitting the push nut 1 to the bolt 6, the contact portion 353 is freely slidable on the surface T of the attached plate 9, the surface T of the attached M is prevented from being impaired, on the other hand, press-fit resistance is also reduced and therefore, it is facilitated to press-fit the push nut 1 to the bolt.

Incidentally, once the push nut 1 having such a constitution is mounted to the bolt 6, even when a lower portion of the push nut 1 is operated with stress in the upper direction, that is, in the drawing direction exerted from the attached member 9 pressed and supported thereby, the front end portions 331 of the bolt locking pieces 330 are engaged with upper portions of the thread ridge 6b of the bolt 6 to thereby achieve large resistance force.

Further, as particularly seen in Figs. 29 through 31, the central portion 351 of the elastic leg piece 350 which is folded back upwardly, is provided with a projection 352 projected from the outer peripheral edge to an outer side in the radius direction, the projection 352 substantially increases a foldback height of the elastic leg piece, in a package, the elastic leg piece 350 or the bolt locking piece 330 of other pushing nut is prevented from fitting into the slit 340 from the transverse direction and intertwining of the elastic leg piece or the bolt locking piece to these members which is seen in the conventional technology, is avoided.

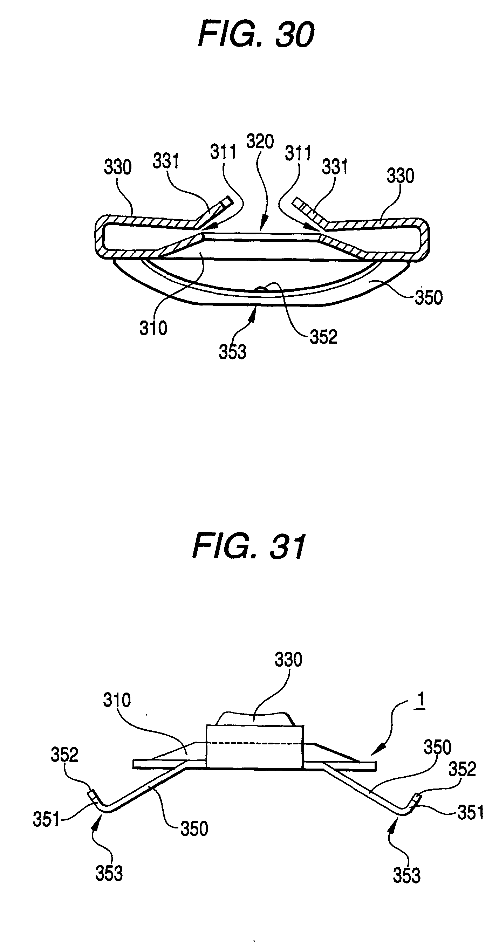

Further, a minimum separating distance between the base portion 310 and the bolt locking piece 330 of the push nut 1 according to this embodiment, that is, an interval between a peripheral edge portion of the bolt through hole 320 of the base portion 330 and the bolt locking piece 330 and a root portion of the front end portion 331, which is designated by notation 311 shown in Fig. 30, is made shorter than a plate thickness of the base portion 310. By such a constitution, even when a number of the push nuts are summarizingly packaged, it is prevented that the elastic leg piece 350 or the bolt locking piece 330 of other push nut is fitted into the minimum separating distance portion 311 between the base portion 310 and the bolt locking piece 330 to thereby intertwine the respective members.

As has been explained above, according to the invention, the push nut fabricated by the metal thin plate comprises the base member perforated with the bolt through hole at its center and the plurality of bolt locking pieces extended from the peripheral edge portion of the base member radially toward the bolt through hole and to the upper side of the base member, there is constructed the constitution in which when the force in the drawing direction is operated to the bolt locking pieces, the surrounding of the bolt through hole is brought into contact with the locking pieces to thereby restrict bending in the lower direction and accordingly. Thus, there is achieved an effect that the push nut can be mounted to the bolt by small press force and on the other hand, once the push nut is mounted to the bolt, large resistance force is exerted in the drawing direction, the push nut is difficult to draw and large fastening force is exerted.

According to the invention, the push nut comprises the pair of one base portion and other base portion constituted by folding one sheet of blanked piece of metal thin plate to overlap via the folded-back portion; the bolt through holes perforated to respectives of the pair of base portions to penetrate the bolt; and the plurality of bolt locking pieces provided at the one base portion, extended to the inner side of the bolt through hole, the plurality of bolt locking pieces having the front end portions having lengths reaching the bolt, wherein the bolt through hole perforated at the one base portion is made larger than the bolt through hole perforated at the other base portion and when force in the drawing direction is applied to the bolt locking pieces, the other base portion is brought into contact with the bolt locking pieces to restrict bending of the front end portions of the locking pieces in the lower direction. Therefore, the push nut can be fabricated easily and can be mounted by small press force, on the other hand, once the push nut is mounted to the bolt, large resistance force is achieved in the drawing direction, as a result, there is achieved an effect of providing the push nut which is difficult to draw and exerts large fastening force. Further, at the same time, there also is achieved an effect of carrying out automatic mounting using an assembling machine simply and firmly since the push nut is mounted to the bolt by a single step.

According to the invention, the push nut fabricated by a metal thin plate comprises a base portion perforated with a bolt through hole at a center thereof; the plurality of bolt locking pieces extended from the base portion to the bolt through hole and engaged with a bolt and leg pieces directly connected to the base portion and positioned between an attached member and the base portion, wherein slits are perforated between an outer peripheral edge of the base portion and the bolt through hole and outer peripheral portions of the base portion partitioned by the slits are folded to bend to a lower side to constitute the elastic leg pieces. Therefore, even when a number of pieces of the push nuts are randomly packaged by bagging or the like, portions of these are not intertwined to thereby achieve an effect of significantly promoting efficiency of attaching operation.

## Claims

1. A push nut made of a metal thin plate comprising:
a base member perforated with a bolt through hole at a center thereof so that a bolt passes through the bolt through hole; and
a plurality of bolt locking pieces extended from a peripheral edge portion of the base member radially toward the bolt through hole and to an upper side of the base member,
wherein when a force in a drawing direction is applied to the bolt locking pieces, a surrounding of the bolt through hole is brought into contact with the bolt locking pieces to restrict the bolt locking pieces from bending in a lower direction.

2. The push nut according to claim 1, wherein the base member is a pair of base members folded a stamped piece of a metal thin plate to overlap via a folded-back portion;
the plurality of the bolt locking pieces are provided with one base member;
the bolt through hole is two bolt through holes provided at the base members, respectively;
each of the bolt locking pieces has length so that each of front end portions of the bolt locking pieces reaches the bolt; and
the bolt through hole of the one base member is larger in diameter than the bolt through hole of the other base member.

3. The push nut according to claim 1, wherein a raised portion formed by projecting upwardly the surrounding of the bolt through hole at a position on a lower side of the bolt locking pieces.

4. The push nut according to claim 2, wherein a raised portion formed by projecting upwardly the surrounding of the bolt through hole of the other base member.

5. The push nut according to claim 1, wherein the base member includes an elastic piece extended downwardly from the base member.

6. The push nut according to claim 2, wherein the other base member includes an elastic piece extended downwardly from the other base member.

7. The push nut according to any one of claims 3 and 4, wherein the raised portion has a conical shape.

8. The push nut according to any one of claims 3, 4, and 7, wherein an upper end face of the raised portion is inclined in conformity with one of a thread ridge pitch of a bolt and a thread groove pitch of the bolt.

9. The push nut according to any one of claims 1 to 8, wherein the front end portions of the bolt locking pieces have different height from each other so that the height of each of front end portions conforms to the thread ridge pitch of the bolt.

10. The push nut according to any one of claims 2 to 8, wherein the one base member and the other base member have outer edges formed in circular shapes having the same diameter;
parts of the base members are connected with each other to overlap each other; and
the parts of the base members form the folded-back portion.

11. The push nut according to any one of claims 2 to 10, wherein the folded-back portion includes a portion of raising the outer edge of the one base member.

12. The push nut according to any one of claims 1 to 11, further comprising a leg piece directly connected to the base member and positioned between an attached member and the base member,
wherein slits are perforated between the outer edge of the base member and the bolt through hole; and
the outer edge of the base member partitioned by the slits is bent to a lower side to form the leg piece having elasticity.

13. The push nut according to claim 12, wherein a central portion of the leg piece is folded back upwardly to form a contact portion contacting with a surface of the attached member.

14. The push nut according to claim 13, wherein the central portion include a projection projected from the outer edge outwardly in a radius direction at a center of the central portion.

15. The push nut according to any one of claims 1 to 14, wherein a minimum separating distance between the base member and the bolt locking piece is shorter than a plate thickness of the base member.
